# EUROPEAN PATENT APPLICATION

(11) **EP 1 172 744 A1**
(43) Date of publication of application: **16.01.2002**
(21) Application number: 00202483.4
(22) Date of filing: 13.07.2000
(51) Int. Cl.: G06F 17/60

(54) **System for managing consumer to business and consumer to consumer relationships**

(71) Applicant: van Brummen, John, 1054 ZV Amsterdam (NL)
(72) Inventor: van Brummen, John, 1054 ZV Amsterdam (NL)
(74) Representative: de Vries, Johannes Hendrik Fokke

(57) **Abstract**

A system for managing consumer to business and consumer to consumer relationships, comprises a number of client systems and a server system. A client system is adapted to communicate with the server system through a computer network, wherein the server system supports a web site with a number of web pages. The server system comprises a consumer database, wherein the web site comprises a registration component with one or more web pages for registering consumers in the consumer database. The registration page(s) request a consumer to register his consumer profile. The server system is adapted to communicate information from participating businesses to consumers in dependence on the consumer profiles. The consumer database comprises a consumer account for each consumer for storing rewards obtained in accordance with information communicated from businesses to consumers. The web site comprises a purchase registration component to allow a consumer to promote his rewards into cash rewards in dependence on the purchase of products from participating businesses.

## Description

The invention relates to a consumer and business service system, and more particularly to a system for managing consumer to business and consumer to consumer relationships, comprising a number of client systems and a server system, wherein a client system is adapted to communicate with the server system through a computer network, and the server system supports a web site with a number of web pages, the server system comprising a consumer database, and the web site comprising a registration component with one or more web pages for registering consumers in the consumer database.

Various systems of this type are known, wherein two main types of systems can be distinguished. A first type of systems are systems operated by businesses for registration of their customers, so that they can use the customer data to communicate information to their customers. A second type of systems are systems operated by consumer organisations, wherein a consumer organisation tries to build a community of consumers with the purpose of negotiating discounts on product prices. Both types of known systems have several disadvantages, for example the biased interest of the entity operating the system, i.e. either the business or the consumer organisation. All systems show the disadvantage of a very rigid application.

The invention aims to provide an improved system of the above-mentioned type.

According to the invention a system of the above referenced type is characterized in that the registration page(s) request(s) a consumer to register a consumer profile, wherein the server system is adapted to communicate information from participating businesses to consumers in dependence on the consumer profiles stored in the consumer database, wherein the consumer database comprises a consumer account for each consumer for storing rewards obtained in accordance with information communicated from businesses to consumers, wherein the web site comprises a purchase registration component to allow a consumer to promote his rewards into cash rewards in dependence on the purchase of products from participating businesses.

In this manner a system is obtained, wherein the interests of all parties using the system are supported, i.e. both for businesses and consumers. Consumers receive personalised information, whereas businesses have the guarantee that their information is received by interested consumers resulting in improved communication response rates. Moreover, consumers have an interest in providing their personal consumer profile as in this manner they will receive rewards and these rewards can be promoted to cash rewards through the purchase of products.

The invention will be further explained by reference to the drawings in which an embodiment of the invention is schematically shown.

Fig. 1 schematically shows an embodiment of the system of the invention.

Figs. 2-4 show illustrations to explain the operation of the system of fig. 1.

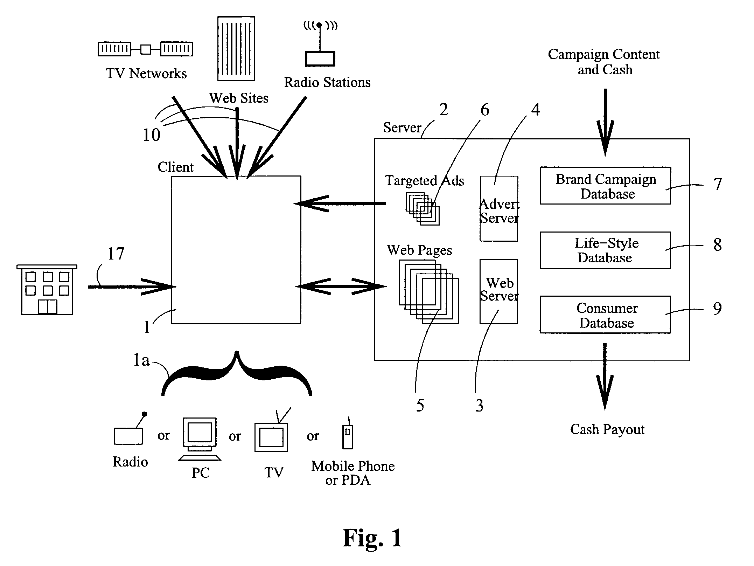

Referring to fig. 1 there is shown a system for managing consumer to business and consumer to consumer relationships, comprising a number of client systems 1 and a server system 2. For the sake of clarity only one client system 1 is shown in fig. 1. As illustrated at 1a, the client system 1 can be any suitable client terminal, such as a radio, a PC, a TV, a mobile phone or a personal digital assistant (PDA). The server system 2 comprises a web server 3 and an advert server 4, wherein a suitable program runs on the web server 3 to support a web site with a number of schematically indicated web pages 5 as will be explained hereinafter. A further suitable program runs on the advert server 4 to communicate targeted adverts 6 to client systems 1.

Further, the server system 2 comprises a brand campaign database 7, a life-style database 8 and a consumer database 9. It is noted that the block diagram of fig. 1 is intended for explanation purposes only and in practice the server system 2 may comprise one or more computers and any suitable configuration of databases to support the system described.

In operation, the web site supported by the web server 3 comprises a registration component with one or more registration pages of web pages 5 requesting a consumer to register a consumer profile. When a client system 1 contacts the web server 3 for the first time, the consumer can register through these registration pages 5 his TV, radio, web, and mobile phone behaviour. This behaviour may include TV and radio channels of interest, web sites of interest, (electronic) devices used by the consumer, viewing patterns, time slots of use, family members, preferred life-styles, relevant life-phase and planned purchases and the like. All data entered through the registration pages 5 is stored in the consumer database 9 and a consumer account is added to this record. Further, the consumer will be provided with a logon and personal identification. At each next visit the consumer can log on using his identification and, if desired, can change any of his stored profile data. Further the consumer can access his consumer account to see the several reward balances registered on his account as will be explained later. It is noted that the organisation operating the server system 2 will not use the data stored in the consumer database 9 for any commercial use outside the system described and it is guaranteed to the consumers joining the system that their personal data will not be accessible to any other person but the consumer himself.

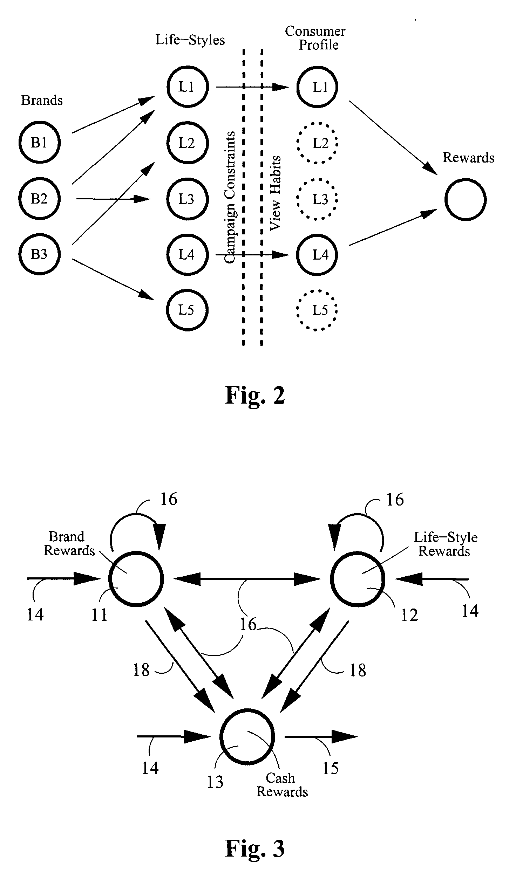

Any business can join the described system by indicating brand / life-style links, i.e. the business can request a brand membership with specific life-styles. The life-style database comprises a number of different life-styles, wherein each life-style comprises a number of brands corresponding with this life-style. Further a life-style will include data like age, family situation, education level, etc. The life-style database 8 and consumer profiles of the consumer database 9 are used to filter the brand communications from the businesses to the consumers such that a maximum impression is guaranteed. Further, consumers can register their brand appreciation through the registration pages 5 wherein they can indicate their brand appreciation for example as like, neutral, impulse or dislike. This brand appreciation can also be used to filter the communications from businesses to consumers. This filtering is shown by way of example in fig. 2, wherein different brands B1-B3 are shown as mapped to different life-styles L1-L5. By mapping the data of the life-style database 8 with the consumer profiles of database 9, communications of specific brands are filtered to member profiles.

The system described allows consumers to gather rewards by watching adverts on TV, listening adverts on the radio, browsing the web, using the mobile phone, and the like as schematically indicated in fig. 1 at 10. The rewards are booked on the consumer account in consumer database 9. An important feature of the system is the flexibility in the type of rewards a consumer can gather. At registration or any suitable moment thereafter, the consumer can choose to be paid in brand rewards, life-style rewards or cash rewards. A reward is a figure representing a cash equivalent. Brand and life-style rewards can be promoted to cash rewards when conditions regarding purchase of brand or life-style products of participating businesses are met. Generally the reward rate will be such that brand rewards have the highest rate, thereafter life-style rewards, and cash rewards will have the lowest rate. Other possibilities to gather rewards by consumers are co-operation in market research, such as retail channel feedback, product feedback, test marketing or any other questionnaire. All rewards received by a consumer are registered on his consumer account. Therefore, the consumer database 9 is adapted to keep for each consumer account one or more brand reward balances, one or more life-style reward balances and a cash reward balance.

The brand campaign database 7 allows businesses to run brand/life-style campaigns by means of which they can communicate campaign content to consumers wherein the communication of adverts are targeted by means of the consumer profiles of database 9 and the life-style records of the database 8 as described above and illustrated in fig. 2. A campaign run by a business through the campaign database 7 comprises for example brand orientated content, an audience target, a campaign budget, viewing constraints, a brand:life-style:cash reward rate, a brand:life-style:cash budget rate and the base reward fee. The audience target is defined in terms of life-styles of the database 8. The viewing filter is a combination of campaign viewing constraints and member viewing habits as registered. Filtering will result in maximising consumer experience in terms of offering personally relevant communication aligned with life-phase, budget, planned purchases, viewing habits, and preferred media. The viewing constraints may include a maximum of adverts per period to prevent irritation for the consumers.

It is a very important aspect of the present invention that rewards gathered by consumers can be used for a number of transactions. The transaction possibilities are illustrated in fig. 3. In fig. 3, brand rewards are illustrated by reference numeral 11, life-style rewards are illustrated by reference numeral 12 and cash rewards are illustrated by reference numeral 13. Cash can enter the system at each of the three reward levels as indicated by arrows 14. Cash rewards can only leave the system by cash payout as indicated by arrow 15. Consumers can trade among each other brand, life-style, and cash rewards 11, 12, 13. Trading possibilities are illustrated in fig. 3 by arrows 16. Trading is supported by the web site provided by the web server 3 and for this purpose the web site comprises a reward trade component with one of more trade pages of the web pages 5, by means of which consumers can offer or ask for brand rewards and life-style rewards at any exchange rate they like. Brand rewards of brand B1 can be traded against brand rewards of any other brand Bi, against life-style rewards or cash rewards. The trade pages 5 allow the consumers to indicate the exchange rate they are prepared to offer. The trade component is adapted to match offers and requests, wherein a personalised offer/need matrix is supplied that allows the consumer to click through supply offers relevant to their demands. The offers are sequenced in best exchange rate order. It is mandatory for offers to be traded partially in order to establish exchange liquidity.

The reward trade component displays all outstanding personal offers. Once an offer has been completed it will be added to the consumer's transaction history. Offers are either executed automatically or manually through a consumer mouse click. Automatic trades take place for offers with a consumer supplied exchange rate upon expiration of a consumer supplied time interval. During this interval the consumer offer is linked with all related counter offers in best-value order. During the same time interval a counter offer can be accepted with one single mouse click. This same mechanism applies to offers that have been entered without an exchange rate. The system allows one reward to be traded against multiple rewards. Upon offer expiration the system will automatically select the best counter offer and delete all other non-reward-covered offers.

A very important quality of the system described is the possibility to promote brand rewards or life-style rewards to cash rewards in a manner decoupled from the actual product purchase. In this manner the system can operate both in the on-line world and off-line world. Products of participating businesses can be provided with a system participator label carrying a secret label code. This secret label code is covered by a removable opaque coating. The secret label code identifies brand, retail channel, retail store, refund identification, production date, and purchase amount, for example. It is noted that for reasons of logistics, the information is registered on two or more separate labels. The secret code will be encrypted with any suitable encryption technology to prevent unauthorised production of participator labels. The secret code can be registered at the web site supported by the web server 3 by removing the coating and entering the number through a purchase registration component including one or more purchase registration pages of the web pages 5 in any suitable manner. This entering of a secret code from a participator label into the system is schematically shown at 17 in fig. 1. Products with participator labels can be bought either in retail or web stores. When the secret code is entered, an amount of brand or life-style rewards corresponding with the purchase price will be promoted to cash rewards, of course only if the reward balance figure is sufficient. If the reward balance figure is not sufficient only a part of the purchase price will be promoted to cash rewards. The promotion of brand or life-style rewards to cash rewards is illustrated in fig. 3 by arrows 18.

Cash rewards can leave the system as normal cash, for example by a monthly payment to a bank account of the consumer or any other manner of payout. Payout of cash rewards can also occur by providing the consumer with a credit to be spent at a specific participating business, for example at a more attractive rate. This can be done for example by providing the consumer with a mobile phone credit balance.

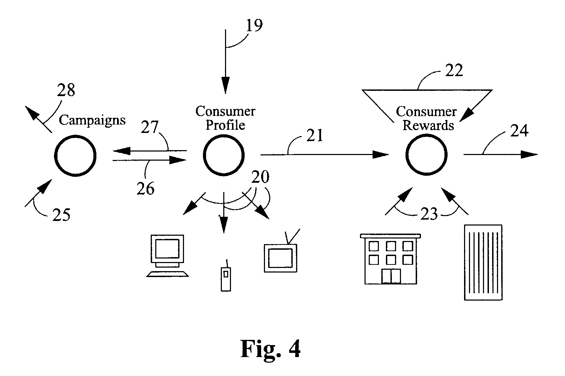

Fig. 4 illustrates the operation of the system described from both the consumer and business sides. As indicated by arrow 19, consumers can register themselves with the system as described above. Arrows 20 indicate the flow of communications from businesses to consumers through their different devices. By receiving/watching the communications consumers gather rewards as indicated by arrow 21. In this manner the consumers gather rewards on their consumer accounts and as explained above consumers can trade their rewards among each other. The trading of rewards is indicated by arrow 22. Rewards can be promoted to cash rewards by purchases as indicated by the arrows 23. As illustrated products can be bought either in retail stores or through I-commerce web sites. Cash rewards are paid out through a bank account or any other suitable manner as indicated by arrow 24.

A business can start a campaign by entering brand content and a budget in the campaign database 7 as indicated by arrow 25. A campaign is mapped to consumer profiles as indicated by arrow 26. This mapping will result in forwarding brand content to the consumers. A campaign feed back is obtained through arrows 27 and 28.

The invention is not restricted to the above described embodiment which can be varied in a number of ways within the scope of the attached claims.

## Claims

1. System for managing consumer to business and consumer to consumer relationships, comprising a number of client systems and a server system, wherein a client system is adapted to communicate with the server system through a computer network, and the server system supports a web site with a number of web pages, the server system comprising a consumer database, and the web site comprising a registration component with one or more web pages for registering consumers in the consumer database, **characterized in that** said registration page(s) request a consumer to register a consumer profile, wherein the server system is adapted to communicate information from participating businesses to consumers in dependence on the consumer profiles stored in the consumer database, wherein the consumer database comprises a consumer account for each consumer for storing rewards obtained in accordance with information communicated from businesses to consumers, wherein the web site comprises a purchase registration component to allow a consumer to promote his rewards into cash rewards in dependence on the purchase of products from participating businesses.

2. System according to claim 1, wherein the server system comprises a lifestyle database comprising a plurality of lifestyles, each lifestyle having lifestyle characteristics such as brands, age, family, sport interests, and the like, wherein the server system uses the consumer profiles and life-styles to filter the brand communications from participating businesses to the consumers.

3. System according to claim 2, wherein the registration page(s) allow(s) the consumers to enter TV, radio, web, and mobile phone behaviour as part of the consumer profile, including for example data regarding preferred TV and radio channels, web sites, viewing patterns, viewing/web-surfing time slots, preferred life-styles, relevant life-phases, planned purchases, budgets, and brand appreciation, wherein the server system comprises a campaign database allowing a participating business to define viewing constraints used by the server system in filtering direct brand communications to consumers and brand communications during for example their TV viewing, radio listening, web surfing and mobile phone use.

4. System according to any one of the preceding claims, wherein the consumer database is adapted to keep for each consumer account at least one brand reward balance, at least one life-style reward balance and a cash rewards balance, wherein the registration component allows the consumer to select the type of rewards he wishes to obtain for participating in said business communications.

5. System according to claim 3 and 4, wherein the campaign database allows participating businesses to define a product(s) information campaign, including for example consumer audience target, campaign budget, brand:life-style:cash reward rate, brand:life-style:cash budget rate, and base reward fee.

6. System according to any one of the preceding claims, wherein products of participating businesses are provided with a system participator label, said label carrying a secret label code comprising information on at least the product brand and product price, wherein said purchase registration component comprises a web page to enter the secret label code, wherein the server system uses the product price to promote brand and/or life-style rewards of the consumer into cash rewards.

7. System according to claim 6, wherein the secret label code can include information on the retail channel, retail store, and production date, wherein the server system is adapted to forward at least this information to the corresponding business upon input of the secret code.

8. System according to claim 6 or 7, wherein said secret label code is covered by a removable opaque coating.

9. System according to claim 4, wherein said web site comprises a reward trade component including one or more trade pages allowing consumers to mutually trade brand, life-style, and cash rewards.

10. System according to claim 9, wherein said trade pages include pages displaying outstanding offers and requests, wherein said trade pages allow a consumer to indicate an exchange rate and a trade time interval, wherein the server system is adapted to either execute offers against requests automatically upon expiration of the time interval or upon an action of the offering consumer.

11. System according to any one of the preceding claims, wherein the cash reward balance of a consumer can be transferred into a credit to be used at a participating business, for example as a mobile phone credit.

12. Server system for a system according to any one of the preceding claims.

13. Client system for a system according to any one of claims 1-11.

14. A computer program comprising computer program code means adapted to implement the server system of any one of claims 1-11 when said program is run on a computer.

15. A computer program as claimed in claim 14 embodied on a computer readable medium or in a file downloadable in a computer.
